# EUROPÄISCHE PATENTSCHRIFT

(11) **EP 3 651 990 B1**
(45) Veröffentlichungstag und Bekanntmachung des Hinweises auf die Patenterteilung: **22.03.2023**
(21) Anmeldenummer: 18768772.8
(22) Anmeldetag: 22.08.2018
(51) Int. Cl.: B33Y 10/00, B33Y 30/00, B33Y 40/00, B29C 64/118, B29C 64/295, B29C 64/321

(54) **3D-DRUCKWERKZEUG FÜR WERKZEUGMASCHINEN**
3D PRINTER FOR MACHINE TOOLS
OUTIL D'IMPRESSION TRIDIMENSIONNELLE POUR MACHINES-OUTILS

(30) Priorität: 14.09.2017 EP 17191095
(43) Veröffentlichungstag der Anmeldung: 20.05.2020
(73) Patentinhaber: Siemens Aktiengesellschaft, 80333 München (DE)
(72) Erfinder: HAASE, Andreas, 09125 Chemnitz (DE); SMOLKA, Karl-Heinz, 09120 Chemnitz (DE)
(74) Vertreter: Siemens Patent Attorneys
(86) Internationale Anmeldenummer: PCT/EP2018/072639
(87) Internationale Veröffentlichungsnummer: WO 2019/052794

(56) Entgegenhaltungen:
- DE-A1-102014 109 246
- US-A- 6 054 077
- US-A1- 2007 003 656
- US-A1- 2015 165 694
- CARSTEN: "Umrüsten CNC Fräse nach 3D Drucker? (Temporär)", INTERNET CITATION, 24. November 2013 (2013-11-24), Seiten 1-4, XP002743768, Gefunden im Internet: URL:http://www.mikrocontroller.net/topic/3 15745 [gefunden am 2015-08-27]

## Beschreibung

Die Erfindung betrifft eine Vorrichtung zur Kopplung an eine Spindel einer Werkzeugmaschine umfassend eine Halterung zur Kopplung an die Spindel der Werkzeugmaschine und eine Werkstoffbearbeitungseinheit. Die Erfindung betrifft ferner eine Werkzeugmaschine mit einer Spindel mit einer derartigen Vorrichtung sowie ein Verfahren zur additiven Fertigung, insbesondere mittels Schmelzschichtung, zur Bildung eines Formstücks mit einer derartigen Vorrichtung.

Die Patentschrift DE112015001860T5 offenbart eine austauschbare Einheit, die eingerichtet ist, an eine rechnergestützte numerische Steuerungsmaschine gekoppelt zu werden. Die austauschbare Einheit umfasst einen Halter, der an eine Spindel der CNC-Maschine gekoppelt ist, eine Steuereinrichtung zum Empfang einer Drehzahl der Spindel als eine Eingabe sowie eine Werkstoffverarbeitungseinheit, die eine erste Funktion als Reaktion auf einen ersten Drehzahlbereich der Spindel ausführt und eine zweite Funktion auf einen zweiten Drehzahlbereich der Spindel ausführt. Zudem beschreibt die Patenschrift einen Extruder, der an eine CNC-Vorrichtung gekoppelt werden kann. Dieser weist einen Halter und einen Generator, welcher eine Drehbewegung der Spindel in Strom für einen Motor zur Bewegung des Extruders umwandelt, auf. Der Extruder stellt einen extrudierten Werkstoff bereit, um als Reaktion auf eine Drehzahl der Spindel ein Bauteil zu bilden.

Die Offenlegungsschrift US 2007/0003656 A1 beschreibt ein Ablagerungsmodellierungssystem umfassend einen Antriebsmechanismus zum Vorschieben eines Fadenstrangs, um ein Modell zu erzeugen. Der Antriebsmechanismus umfasst einen Drehblock, der drehbar mit einem festen Block verbunden ist, und einen Motor, der eine Antriebswelle dreht. Eine Antriebsrolle ist mit der Antriebswelle verbunden, und eine Leerlaufrolle ist mit einer Leerlaufachse verbunden, die sich von dem Schwenkblock in einer im Wesentlichen senkrechten Richtung zur Drehrichtung des Schwenkblocks in Bezug auf den feststehenden Block und in einer im Wesentlichen parallelen Richtung zur Antriebswelle erstreckt.

Die austauschbare Einheit nutzt eine Rotationsenergie der Spindel zur Umwandlung in elektrische Energie mittels eines Generators. Die auf diese Weise gewonnene elektrische Energie wird anschließend mittels eines Motors erneut in Rotationsenergie zum Antrieb des Extruders gewandelt.

Eine Aufgabe der Erfindung ist eine derartige Vorrichtung zu verbessern, vorzugsweise wird eine Komplexität verbessert.

Die Lösung der Aufgabe gelingt durch Anspruch 1, d. h. eine Vorrichtung zur Kopplung an eine Spindel einer Werkzeugmaschine umfassend eine Halterung zur Kopplung an die Spindel der Werkzeugmaschine und eine Werkstoffbearbeitungseinheit, wobei die Werkstoffbearbeitungseinheit ein Getriebe aufweist, welches ein Kraftaufnahmeelement und ein Kraftabgabeelement umfasst, wobei das Kraftaufnahmeelement zur Aufnahme einer mechanischen Kraft der Spindel ausgebildet ist, wobei das Kraftabgabeelement zur Abgabe einer mechanischen Kraft an ein Beförderungselement ausgebildet ist, wobei das Beförderungselement derart ausgebildet ist, ein Filament zu befördern, wobei die Übertragung der vom Kraftaufnahmeelement aufgenommenen Kraft auf das Kraftabgabeelement rein mechanisch erfolgt, wobei das Kraftaufnahmeelement separat zum Kraftabgabeelement ausgebildet ist und wobei eine Drehachse des vom Kraftaufnahmeelement aufgenommenen Drehmoments im Wesentlichen orthogonal zu einer Drehachse des vom Kraftabgabeelement gespeisten Beförderungselements steht, wobei das Getriebe als kombiniertes Getriebe ausgebildet ist, welches ein Zahnradgetriebe umfassend ein erstes Zahnrad und ein zweites Zahnrad mit einem Schneckengetriebe umfassend eine Schneckenwelle und ein Schneckenrad kombiniert, wobei das Beförderungselement zwei gegenüberliegende Andruckrollen aufweist, wobei eine der zwei gegenüberliegenden Andruckrollen als Schneckenrad des Schneckengetriebes ausgeführt ist.

Weitere vorteilhafte Ausführungsformen ergeben sich aus den Unteransprüchen 2 bis 10.

Zudem gelingt die Lösung der Aufgabe durch Anspruch 11, d. h. eine Werkzeugmaschine mit einer Spindel und einer Vorrichtung nach einem der Ansprüche 1 bis 10.

Ferner gelingt die Lösung der Aufgabe durch Anspruch 12, d. h. ein Verfahren zur additiven Fertigung, insbesondere mittels Schmelzschichtung, zur Bildung eines Formstücks mit einer Vorrichtung nach einem der Ansprüche 1 bis 10 mit folgenden Schritten:
- Kraftübertragung der Kraft der Spindel auf das Beförderungselement mittels des Getriebes,
- Aufnahme eines Filaments durch die Werkstoffbearbeitungseinheit,
- Beförderung des Filaments in Richtung eines Ausgabeelements, insbesondere in Richtung einer Düse,
- Erwärmung des Filaments im Ausgabeelement mittels eines Heizelements,
- Ausgeben des erwärmten Filaments.

Eine Werkzeugmaschine gilt als eine Arbeitsmaschine, die ein Werkzeug an einem Werkstück unter gegenseitiger bestimmter Führung zur Wirkung bringt. Sie übernimmt üblicherweise eine Handhabung des Werkzeugs und Werkstücks und ein Aufnehmen, Verarbeiten und Rückführen von Informationen über einen Fertigungsvorgang. Eine Werkzeugmaschine ist eine mechanisierte und vorzugsweise automatisierte Arbeitsmaschine, die durch relative Bewegung zwischen Werkstück und Werkzeug eine vorgegebene Form am Werkstück oder eine Veränderung einer vorgegebenen Form an einem Werkstück erzeugt.

Vorzugsweise umfasst die Werkzeugmaschine eine werkzeugtragende Spindel, wobei das Werkzeug sowohl manuell als auch automatisch gewechselt werden kann. Derartige Spindeln erlauben aufgrund ihrer hohen möglichen Rotationsgeschwindigkeit eine sehr genaue Bearbeitung des Werkstücks. Das Werkstück kann hierbei beispielsweise mittels Fräsen oder Drehen bearbeitet werden.

Vorzugsweise wird eine Werkzeugmaschine mit einer modernen Steuereinheit kombiniert. Diese CNC-Werkzeugmaschinen - CNC bedeutet Computerized Numerical Control - können Werkstücke mit hoher Präzision und vollautomatisch bearbeiten.

Der Begriff "Kopplung" zeigt hierbei eine Verbindung der Vorrichtung und der Spindel der Werkzeugmaschine an. Hierbei sind verschiedene Verbindungsarten denkbar wie beispielsweise Verbindungen mittels Bolzen, Schrauben, Gewinden, Magneten, Elektromagneten, Klebstoff oder anderen Haftmitteln oder Schweißen. Auch Schnappverbindungen oder Klemmverbindungen sowie weitere kraft- oder formschlüssige Verbindungen sind möglich.

Die Vorrichtung umfasst eine Halterung zur Kopplung an die Spindel der Werkzeugmaschine und eine Werkstoffbearbeitungseinheit.

Die Halterung ist vorzugsweise in einer Form ausgebildet, die eine der bereits erwähnten Verbindungsarten zulässt.

Die Werkstoffbearbeitungseinheit weist ein Getriebe auf, welches ein Kraftaufnahmeelement und ein Kraftabgabeelement umfasst. Das Kraftaufnahmeelement ist zur Aufnahme einer mechanischen Kraft der Spindel ausgebildet. Das Kraftabgabeelement ist zur Abgabe einer mechanischen Kraft an ein Beförderungselement ausgebildet. Das Beförderungselement ist derart ausgebildet, ein Filament zu befördern. Die Übertragung der vom Kraftaufnahmeelement aufgenommenen Kraft auf das Kraftabgabeelement erfolgt rein mechanisch.

Ein Getriebe ist ein Maschinenelement, welches eine Kraft, eine Drehzahl, eine Bewegung, insbesondere eine Drehbewegung, oder ein Moment, insbesondere ein Drehmoment, überträgt und/oder umformt. Das Getriebe kann als Getriebe mit einer gleichmäßigen Übersetzung sowie als Getriebe mit einer ungleichmäßigen Übersetzung ausgeführt sein.

Die Übersetzung kennzeichnet hierbei ein Verhältnis - auch Übersetzungsverhältnis genannt - von einer aufzunehmenden eingangsseitigen Kraft (z. B. Drehzahl, Drehmoment) zu einer abzugebenden ausgangsseitigen Kraft.

Die Vorrichtung hat den Vorteil, dass ein Filament auf einfache Weise befördert werden kann. Da die Übertragung der vom Kraftaufnahmeelement aufgenommenen Kraft auf das Kraftabgabeelement rein mechanisch erfolgt, ist die Vorrichtung nicht anfällig für Fehler, günstig und zudem verlustarm.

Zudem ist eine kompakte Bauweise möglich. Außerdem wird nur wenig Regelungstechnik benötigt, da das Beförderungselement unmittelbar über die Drehzahl der Spindel gesteuert werden kann.

Gemäß der Erfindung ist das Kraftaufnahmeelement zur Aufnahme eines Drehmoments der Spindel ausgebildet. Vorzugsweise ist das Kraftaufnahmeelement unmittelbar mit der Spindel verbunden. Hierbei sind verschiedene Verbindungsarten denkbar wie Schnappverbindungen, Klemmverbindungen oder andere kraft- oder formschlüssige Verbindungen. Zudem sind auch Verbindungen mittels Bolzen, Schrauben, Gewinden, Magneten, Elektromagneten, Klebstoff oder anderen Haftmitteln oder Schweißen möglich.

Gemäß der Erfindung ist das Kraftabgabeelement zur Abgabe des Drehmoments an das Beförderungselement ausgebildet.

Das Kraftabgabeelement kann ein Drehmoment abgeben, welches dem vom Kraftaufnahmeelement aufgenommenen Drehmoment entspricht. Jedoch ist auch die Abgabe eines vergrößerten oder verkleinerten Drehmoments möglich. Ein vergrößertes Drehmoment zieht hierbei eine geringere Drehzahl nach sich. Ein verkleinertes Drehmoment führt zu einer höheren Drehzahl.

Gemäß der Erfindung ist das Kraftaufnahmeelement separat zum Kraftabgabeelement ausgebildet. Vorzugsweise steht eine Drehachse des vom Kraftaufnahmeelement aufgenommenen Drehmoments im Wesentlichen orthogonal zu einer Drehachse des vom Kraftabgabeelement gespeisten Beförderungselements.

Die beiden Drehachsen stehen senkrecht zueinander. Dies reduziert eine Komplexität des Getriebes. Jedoch sind nicht erfindungsgemäß auch andere Winkel möglich.

Gemäß der Erfindung ist das Getriebe als kombiniertes Getriebe ausgebildet, welches ein Zahnradgetriebe umfassend ein erstes Zahnrad und ein zweites Zahnrad mit einem Schneckengetriebe umfassend eine Schneckenwelle und ein Schneckenrad kombiniert.

Vorzugweise ist in einer beispielhaften Ausführung des kombinierten Getriebes das erste Zahnrad unmittelbar mit der Spindel verbunden. Das erste Zahnrad ist hierbei das Kraftaufnahmeelement, da es unmittelbar Kraft von der Spindel aufnimmt.

Das mit dem ersten Zahnrad gepaarte zweite Zahnrad ist Teil der Schneckenwelle oder mit der Schneckenwelle drehfest verbunden. Dies stellt das Kraftabgabeelement dar.

Das Kraftabgabeelement ist insbesondere das Element, welches unmittelbar Kraft an das Beförderungselement abgibt. In diesem Fall das zweite Zahnrad.

Die Schneckenwelle ist mit dem Schneckenrad gepaart. Das Schneckenrad ist in der beispielhaften Ausführung das Beförderungselement. Das Kraftabgabeelement gibt die Kraft an das Beförderungselement ab.

Auch eine Verbindung des zweiten Zahnrads mit der Schneckenwelle mittels eines weiteren Getriebes ist denkbar.

Ferner sind nicht erfindungsgemäß auch andere Getriebearten, welche eine rein mechanische Kraftübertragung ermöglichen, z. B. Kegelradgetriebe, denkbar.

Als Material für die Zahnräder, die Schneckenwelle und/oder das Schneckenrad eignen sich Metall oder Kunststoff. Besonders gut eignen sich Legierungen aus Kohlenstoff und Eisen oder verschiedene Stähle.

Vorzugsweise wird beim Schneckengetriebe eine Schneckenwelle, die ein Material einer ersten Härte aufweist, mit einem Schneckenrad gepaart, das ein Material einer zweiten Härte aufweist, wobei die zweite Härte weicher gegenüber der ersten Härte zur Verringerung einer Reibung ist. Beispielsweise weist die Schneckenwelle gehärteten Stahl auf. Beispielsweise weist das Schneckenrad Messing oder Bronze auf.

Das Zahnradgetriebe und/oder das Schneckengetriebe weisen ein Schmierstoffelement auf. Das Schmierstoffelement ist vorzugsweise ein Fett oder Öl.

Vorzugsweise weist das Schmierstoffelement eine Fähigkeit zum Abtransport von Wärme auf.

Als Schneckenwelle eignet sich besonders gut eine Schneckenwelle mit einer Schrägverzahnung, wobei ein Zahn sich schraubenförmig um eine Radachse windet und dieser Zahn wenigstens ein Elastomer beinhaltet. Z. B. bildet ein Gummizahn die Verzahnung der Schneckenwelle.

Das gepaarte Schneckenrad benötigt hierbei keine Verzahnung. Ein Vorteil ist hierbei, dass auf diese Weise ein Filament befördert werden kann, ohne dass das Filament in einem Zahn des Schneckenrads verhakt. Zudem kann hierbei auf das Schmierstoffelement verzichtet werden, das am Filament anhaften könnte.

Gemäß der Erfindung weist das Beförderungselement zwei gegenüberliegende Andruckrollen auf.

Eine Andruckrolle ist ein zylindrischer Körper, welcher von einer Mantelfläche und zwei Schnittkreisflächen eingeschlossen wird.

Erfindungsgemäß wirkt auf wenigstens eine der beiden Andruckrollen wie bereits erläutert die Kraft der Spindel.

Das Kraftabgabeelement gibt die Kraft an das Beförderungselement ab. In diesem Fall gibt das Kraftabgabeelement die Kraft an wenigstens eine Andruckrolle ab.

Die zweite Andruckrolle ist vorzugsweise auf einer Achse, die senkrecht auf einer idealisierten Schnittkreisfläche steht, drehbar gelagert.

Jedoch besteht auch die Möglichkeit, beide Andruckrollen mittels eines oder mehrerer Getriebe von der Spindel antreiben zu lassen.

Zudem kann das Beförderungselement auch drei oder mehr Andruckrollen aufweisen. Günstig erweist sich jedoch eine geradzahlige Anzahl, welche eine jeweilig gegenüberliegende Anordnung der Andruckrollen ermöglicht.

An wenigstens eine der angeordneten Andruckrollen wird die Kraft vom Kraftabgabeelement abgegeben.

Gemäß der Erfindung dient das Beförderungselement einer Beförderung des Filaments in Richtung eines Ausgabeelements, insbesondere in Richtung einer Düse des Ausgabeelements.

Eine Drehrichtung der Andruckrollen ist vorzugsweise so geartet, dass das Filament in Richtung des Ausgabeelements befördert wird. Vorzugsweise ist die Richtung des aus der Düse austretenden Filaments im Wesentlichen parallel zur Rotationsachse der Spindel.

Vorzugsweise bestimmt die Drehzahl der Spindel unter Bezugnahme auf das Übersetzungsverhältnis des Getriebes die Drehzahl des Beförderungselements und somit auch, wie schnell das Filament in Richtung des Ausgabeelements befördert wird.

Die Werkzeugmaschine weist vorzugsweise eine Steuereinheit auf. Der Werkzeugmaschine kann die gewünschte Drehzahl der Spindel mitgeteilt werden. Die Werkzeugmaschine ist vorzugsweise als CNC-Werkzeugmaschine ausgeführt. Die Steuereinheit ist vorzugsweise derart ausgebildet, auf Basis von wenigstens einer Materialeigenschaft des Filaments eine materialeigenschaftsspezifische Geschwindigkeit, insbesondere Rotationsgeschwindigkeit, der Spindel zu bestimmen.

Vorzugsweise ist die Düse Teil eines 3D-Druckkopfs.

In einer weiteren vorteilhaften Ausführung der Erfindung weist die Vorrichtung ein Filamentaufnahmemittel zum Aufnehmen eines Filaments auf.

Vorzugsweise erfolgt die Aufnahme des Filaments durch einen Kanal in der Spindel. Der Kanal ist vorzugsweise für eine Kühlmittel- und/oder Schmierstoffelementzufuhr ausgelegt.

Ferner ist auch eine Filamentspule möglich. Bei der Filamentspule ist das Filament vorzugsweise um den Spindelstock gewickelt und/oder ringförmig über den Spindelstock abgelegt.

Das Filament umfasst vorzugsweise ein Formwachs, Thermoplast, Duroplast oder einen anderen Kunststoff. Jedoch können auch andere Materialien, beispielsweise Metalle wie Silber, Gold, Zinn, Kupfer oder Messing, verwendet werden.

Generell eignen sich Stoffe, welche sich, vorzugsweise in einem Temperaturbereich, verformen lassen. Der Temperaturbereich liegt vorzugsweise zwischen 150°C und 300°C, insbesondere zwischen 200°C und 270°C.

In einer weiteren vorteilhaften Ausführung der Erfindung weist die Werkstoffbearbeitungseinheit wenigstens ein Heizelement auf.

Vorzugsweise ist das Heizelement in die Werkstoffbearbeitungseinheit integriert. Jedoch ist auch ein externes Heizelement, welches mit der Werkstoffbearbeitungseinheit verbunden ist, möglich.

In einer weiteren vorteilhaften Ausführung der Erfindung ist das Heizelement im Ausgabeelement angeordnet.

Vorzugsweise ist das Heizelement an oder in unmittelbarer Nähe der Düse des Ausgabeelements angeordnet.

Das Filament wird mittels des Beförderungselements in Richtung der Düse befördert, auf eine Temperatur erwärmt, sodass es verformbar ist, und ausgegeben.

Vorzugsweise ist in der Steuereinheit eine Abfolge, ein Muster oder eine andere Vorgabe hinterlegt. Auf Basis dieses Musters, dieser Abfolge oder dieser Vorgabe kann das Filament in Richtung der Düse befördert, erwärmt und ausgegeben werden.

In einer weiteren vorteilhaften Ausführung der Erfindung dient die Werkstoffbearbeitungseinheit einer Bildung eines Formstückes auf Basis des Filaments.

Das Formstück ist vorzugsweise als Datensatz (z. B. CAD-File) in der Werkzeugmaschine, vorzugsweise in der Steuereinheit, hinterlegt. Auf Basis des Datensatzes erfolgt mittels der Steuereinheit eine Steuerung der Spindel derart, dass das Formstück erstellt werden kann.

Vorzugsweise ist die Vorrichtung als ein 3D-Druckkopf ausgebildet. Der 3D-Druckkopf schafft auf Basis des Filaments und des in der Steuereinheit hinterlegten Musters oder der in der Steuereinheit hinterlegten Abfolge oder Vorgabe ein Formstück.

In einer weiteren vorteilhaften Ausführung der Erfindung weist die Vorrichtung eine Kommunikationsschnittstelle zur Kommunikation mit einer Steuereinheit auf.

Vorzugsweise weist die Vorrichtung zudem mindestens einen Sensor auf. Mittels der Kommunikationsschnittstelle können Daten des Sensors erfasst werden. Auf diese Weise können z. B. eine Temperatur des Heizelements, eine Drehzahl der Spindel und eine Drehzahl des Beförderungselements erfasst werden und an die Steuereinheit übermittelt werden.

Die Kommunikationsschnittstelle gewährleistet so einen sicheren Betrieb der Vorrichtung.

Vorzugsweise wird die Kommunikation mittels eines Bussystems oder mittels Industrial Ethernet bewerkstelligt. Jedoch können auch andere Kommunikationstechnologien eingesetzt werden.

In einer weiteren vorteilhaften Ausführung der Erfindung dient die erläuterte Vorrichtung einer additiven Fertigung, insbesondere mittels Schmelzschichtung, eines Formstücks.

Die Schmelzschichtung ist ein additives Fertigungsverfahren, bei welchem ein Formstück schichtweise aus einem schmelzfähigen Werkstoff oder einem Werkstoff, der bei Wärmezufuhr verformbar ist, aufgebaut wird. Die Schmelzschichtung ist auch unter den Begriffen "Fused Deposition Modeling" oder "Fused Filament Fabrication" bekannt.

Bei der Schmelzschichtung kann das Filament erwärmt und tröpfchenweise von der Düse ausgegeben werden oder als Strang von der Düse ausgegeben werden.

In einer weiteren vorteilhaften Ausführung der Erfindung umfasst eine Werkzeugmaschine mit einer Spindel eine derartige mit der Spindel koppelbare Vorrichtung.

Dies bietet den Vorteil, dass bereits vorhandene Werkzeugmaschinen mit der Vorrichtung ausgestattet werden können. Es ist keine Anschaffung eines neuen kostenintensiven 3D-Druckers nötig.

Vorzugsweise ist die Vorrichtung als austauschbare Vorrichtung ausgebildet, die von einem Kunden bei Bedarf ausgetauscht werden kann.

Dies hat den Vorteil, dass ein Alternativbetrieb der Werkzeugmaschine, z. B. als Fräse, möglich ist.

Die Erfindung offenbart ein Verfahren zur additiven Fertigung, insbesondere mittels Schmelzschichtung, zur Bildung eines Formstücks mit der erläuterten Vorrichtung.

Hierbei erfolgt die Kraftübertragung der Kraft der Spindel auf das Beförderungselement mittels des Getriebes rein mechanisch.

Es gilt der Zusammenhang von Kraft und Drehmoment: Das Drehmoment gibt an, wie stark eine Kraft auf einen drehbar gelagerten Körper wirkt.

Als drehbar gelagerte Körper gelten vorzugsweise die Spindel und die Andruckrollen.

Das Filament wird durch die Werkstoffbearbeitungseinheit aufgenommen und auf die bereits erläuterte Weise in Richtung des Ausgabeelements, insbesondere in Richtung einer Düse, befördert. Vorzugsweise im Ausgabeelement wird das Filament erwärmt, insbesondere mittels des Heizelements, und vom Ausgabeelement ausgegeben.

Vorzugsweise wird das erwärmte Filament tröpfchenweise oder als Strang ausgegeben.

Vorzugsweise wird das erwärmte Filament auf einen Arbeitstisch oder eine andersartige Arbeitsfläche ausgegeben. Jedoch kann auch beispielsweise ein erwärmtes Filament, beispielsweise aus Kunststoff, in oder auf Metallteile oder andere Teile ausgegeben werden.

Der Arbeitstisch kann beweglich ausgebildet sein und sich zur Bildung eines Formstückes beispielsweise gemäß einer Vorgabe auf vorzugsweise bestimmten Achsen bewegen.

Ferner ist es auch möglich, einen Spindelkopf oder einen Teil der Werkzeugmaschine, welcher die Spindel umfasst, auf vorzugsweise bestimmten Achsen beweglich auszubilden.

Die Erfindung bietet eine, vorzugsweise austauschbare, Vorrichtung, die Funktionen eines 3D-Druckkopfs wahrnimmt. Die Erfindung bietet eine komfortable und günstige Lösung für ein 3D-Druckwerkzeug für Werkzeugmaschinen.

Die Drehzahl der Spindel kann in die Steuereinheit eingegeben werden. Hierbei können Materialeigenschaften des Filaments berücksichtigt werden. Die Drehzahl der Spindel bestimmt unter Bezugnahme auf das Übersetzungsverhältnis des Getriebes eine Geschwindigkeit einer Materialzuführung des Filaments. Es ist kein externer Antrieb für die Materialzuführung nötig.

Die Vorrichtung kann eine in sich geschlossene Einheit bilden, bei welcher keine zusätzlichen Antriebe oder Kabel erforderlich sind.

Vorzugsweise ist die Vorrichtung an die Spindel der Werkzeugmaschine gekoppelt. Die Vorrichtung wird hierbei vorzugsweise in einem Werkzeugschaft verankert, welcher bisher auch einer Verankerung von beispielsweise Fräswerkzeugen dient. Vorzugsweise bleibt die Spindel jedoch drehbar.

Die Erfindung bietet den Vorteil, dass ein mechanischer und elektrischer Aufwand verringert und eine Komplexität reduziert wird.

Im Folgenden wird die Erfindung anhand der in den Figuren dargestellten Ausführungsbeispiele näher beschrieben und erläutert. Es zeigen:
- FIG 1: eine Ausgestaltung der Vorrichtung mit einer angetriebenen Andruckrolle und einer Filamentaufnahme durch einen Kanal einer Spindel,
- FIG 2: eine Ausgestaltung der Vorrichtung mit zwei angetriebenen Andruckrollen und einer ringförmigen Filamentaufnahme,
- FIG 3: ein Verfahren zur additiven Fertigung mittels einer erfindungsgemäßen Vorrichtung.

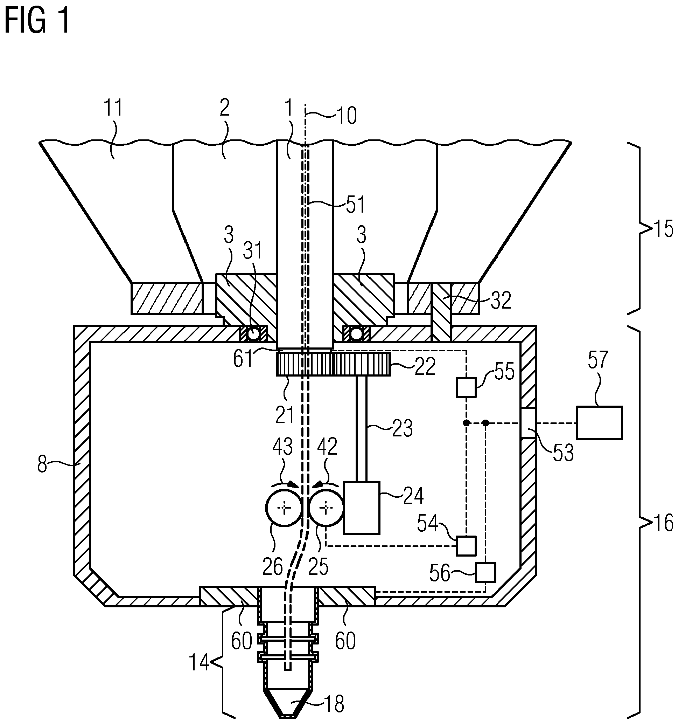

FIG 1 zeigt eine Ausgestaltung der Vorrichtung mit einer angetriebenen Andruckrolle 25 und einer Filamentaufnahme durch einen Kanal einer Spindel 1.

Ein Spindelgehäuse 11 umfasst einen Spindelstock 2. Der Spindelstock 2 umfasst die Spindel 1. Diese Komponenten sind nach dem Stand der Technik Teil einer Werkzeugmaschine 15. Die Spindel 1 rotiert um eine Rotationsachse 10. Im Werkzeugschaft 3 wird die Vorrichtung 16 befestigt. Die Vorrichtung 16 umfasst ein Kugellager 31 und ein Vorrichtungsgehäuse 8 und ist mittels der Halterung 61 an die Spindel 1 gekoppelt. Zudem wird in der Figur die Vorrichtung 16 mit einem Befestigungselement 32 am Spindelgehäuse 11 der Werkzeugmaschine 15, die vorzugsweise als CNC-werkzeugmaschine ausgeführt ist, befestigt. Die Spindel 1 soll sich in der Vorrichtung 16 drehen, jedoch soll die Vorrichtung 16 sich nicht mitdrehen.

Ein Getriebe ist in der Figur als kombiniertes Getriebe ausgebildet. Dieses umfasst ein Zahnradgetriebe umfassend ein erstes Zahnrad 21 und ein zweites Zahnrad 22. Das Zahnradgetriebe ist mit einem Schneckengetriebe umfassend eine Schneckenwelle 24 und ein Schneckenrad 25 kombiniert.

Die Figur zeigt eine optionale Verbindungsstange 23, die das zweite Zahnrad 22 mit der Schneckenwelle 24 drehfest verbindet. Das zweite Zahnrad 22 kann auch unmittelbar mit der Schneckenwelle 24 verbunden sein.

Das erste Zahnrad 21 ist unmittelbar mit der Spindel 1 verbunden. Das erste Zahnrad 21 ist hierbei das Kraftaufnahmeelement, da es Kraft von der Spindel 1 aufnimmt.

Das mit dem ersten Zahnrad 21 gepaarte zweite Zahnrad 22 ist Teil der Schneckenwelle 24 oder mit der Schneckenwelle 24 drehfest verbunden. Dies stellt das Kraftabgabeelement dar.

Die Schneckenwelle 24 ist mit dem Schneckenrad 25 gepaart. Das Schneckenrad 25 ist eine Andruckrolle und somit Teil des Beförderungselements. Die Drehrichtung des Schneckenrads 25 zeigt der Pfeil 42. Die Schneckenwelle 24 als Kraftabgabeelement gibt die Kraft an das Beförderungselement ab.

Gegenüberliegend ist die Andruckrolle 26 mit der Drehrichtung 43 angeordnet.

Die Vorrichtung umfasst ein Heizelement 60 zur Erwärmung eines Filaments 51.

Die beiden Andruckrollen 25 und 26 befördern ein Filament 51, welches durch einen Kanal der Spindel 1 geführt wird, in Richtung eines Ausgabeelements 14. Hierbei wird die Andruckrolle 25 aktiv bewegt.

Die Andruckrolle 25 hat zwei Funktionen: Sie ist einerseits als Schneckenrad Teil des Schneckengetriebes, andererseits ist sie als Andruckrolle Teil des Beförderungselements. Die Andruckrolle 26 hat nur eine Funktion als Andruckrolle.

Das Ausgabeelement 14 umfasst eine Düse 18 zum Ausgeben des erwärmten Filaments 51.

Die Vorrichtung 16 umfasst zudem eine Kommunikationsschnittstelle 53, mittels welcher Informationen an eine Steuereinheit 57, die vorzugsweise Teil der CNC-Werkzeugmaschine ist, übermittelt werden. Die Vorrichtung weist in der Figur beispielhaft einen Sensor 55 zur Drehzahlmessung der Spindel 1, einen Sensor 54 zur Drehzahlmessung der als Schneckenrad 25 ausgebildeten Andruckrolle und einen Sensor 56 zur Temperaturmessung des Heizelements 60 auf.

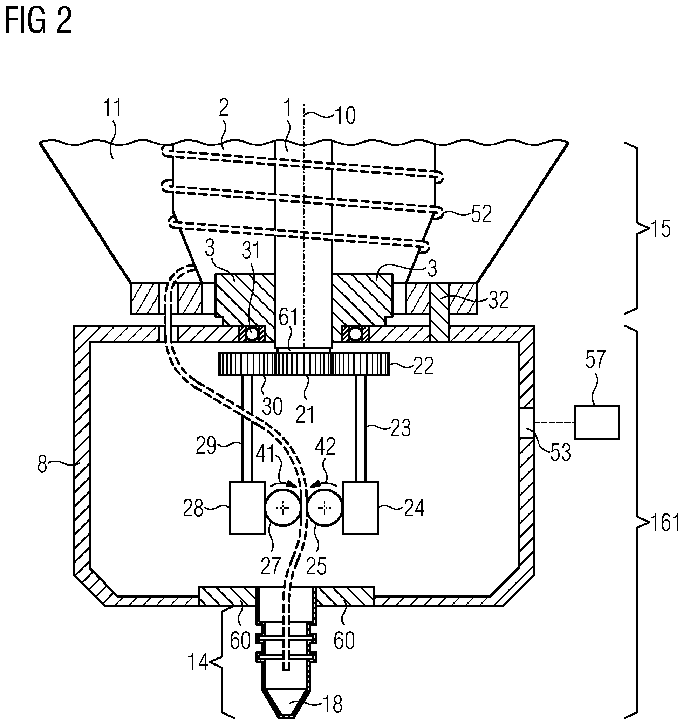

FIG 2 zeigt eine Ausgestaltung der Vorrichtung mit zwei angetriebenen Andruckrollen 25 und 27 und einer ringförmigen Filamentaufnahme.

Das Spindelgehäuse 11 umfasst den Spindelstock 2. Der Spindelstock 2 umfasst die Spindel 1. Diese Komponenten sind nach dem Stand der Technik Teil der Werkzeugmaschine 15. Die Spindel 1 rotiert um die Rotationsachse 10. Im Werkzeugschaft 3 wird die Vorrichtung 161 befestigt. Die Vorrichtung 161 umfasst das Kugellager 31 und das Vorrichtungsgehäuse 8 und ist mittels der Halterung 61 an die Spindel 1 gekoppelt. Zudem wird in der Figur die Vorrichtung 161 mit dem Befestigungselement 32 am Spindelgehäuse 11 der Werkzeugmaschine 15, die vorzugsweise als CNC-werkzeugmaschine ausgeführt ist, befestigt. Die Spindel 1 soll sich in der Vorrichtung 16 drehen, jedoch soll die Vorrichtung 161 sich nicht mitdrehen.

Ein Getriebe ist in der Figur als kombiniertes Getriebe ausgebildet.

Im Gegensatz zu FIG 1 werden in FIG 2 beide Andruckrollen 25 und 27 aktiv angetrieben.

Das kombinierte Getriebe umfasst ein erstes Zahnradgetriebe mit dem ersten Zahnrad 21 und dem zweiten Zahnrad 22. Das Zahnradgetriebe ist mit einem Schneckengetriebe umfassend die Schneckenwelle 24 und das Schneckenrad 25 kombiniert.

Die Figur zeigt eine optionale Verbindungsstange 23, die das zweite Zahnrad 22 mit der Schneckenwelle 24 drehfest verbindet. Das zweite Zahnrad 22 kann auch unmittelbar mit der Schneckenwelle 24 verbunden sein.

Das Getriebe umfasst zudem ein zweites Zahnradgetriebe mit dem ersten Zahnrad 21 und einem dritten Zahnrad 30. Das Zahnradgetriebe ist mit einem Schneckengetriebe umfassend die Schneckenwelle 28 und das Schneckenrad 27 kombiniert.

Die Figur zeigt eine optionale Verbindungsstange 29, die das dritte Zahnrad 30 mit der Schneckenwelle 28 drehfest verbindet. Das dritte Zahnrad 30 kann auch unmittelbar mit der Schneckenwelle 28 verbunden sein.

Das erste Zahnrad 21 ist unmittelbar mit der Spindel 1 verbunden. Das erste Zahnrad 21 ist hierbei das Kraftaufnahmeelement, da es Kraft von der Spindel 1 aufnimmt.

Das mit dem ersten Zahnrad 21 gepaarte zweite Zahnrad 22 ist Teil der Schneckenwelle 24 oder mit der Schneckenwelle 24 drehfest verbunden. Das mit dem ersten Zahnrad 21 gepaarte dritte Zahnrad 30 ist Teil der Schneckenwelle 28 oder mit der Schneckenwelle 28 drehfest verbunden. Auf diese Weise wird die Kraft abgegeben.

Die Schneckenwelle 24 ist mit dem Schneckenrad 25 gepaart. Die Schneckenwelle 28 ist mit dem Schneckenrad 27 gepaart. Das Schneckenrad 25 ist eine Andruckrolle und somit Teil des Beförderungselements. Die Drehrichtung des Schneckenrads 25 zeigt der Pfeil 42. Das Schneckenrad 27 ist eine Andruckrolle und somit Teil des Beförderungselements. Die Drehrichtung des Schneckenrads 27 zeigt der Pfeil 41. Die beiden Schneckenräder 25 und 27 sind gegenüberliegend angeordnet.

Die Schneckenwellen 24 und 28 geben Kraft an das Beförderungselement ab.

Das erste Zahnrad 21 ist also Teil des ersten Zahnradgetriebes als auch Teil des zweiten Zahnradgetriebes.

Die Andruckrolle 25 hat insbesondere zwei Funktionen: Sie ist einerseits als Schneckenrad Teil des Schneckengetriebes, andererseits ist sie als Andruckrolle Teil des Beförderungselements. Eben dies gilt auch für die Andruckrolle 27.

Die Vorrichtung umfasst das Heizelement 60 zur Erwärmung des Filaments 52.

Die beiden Andruckrollen 25 und 27 befördern das Filament 52, welches ringförmig um den Spindelstock 2 gelegt ist, in Richtung des Ausgabeelements 14. Das Ausgabeelement 14 umfasst die Düse 18 zum Ausgeben des erwärmten Filaments 52.

Die Vorrichtung 161 umfasst zudem eine Kommunikationsschnittstelle 53, mittels welcher Informationen an eine Steuereinheit 57, die vorzugsweise Teil der CNC-Werkzeugmaschine ist, übermittelt werden.

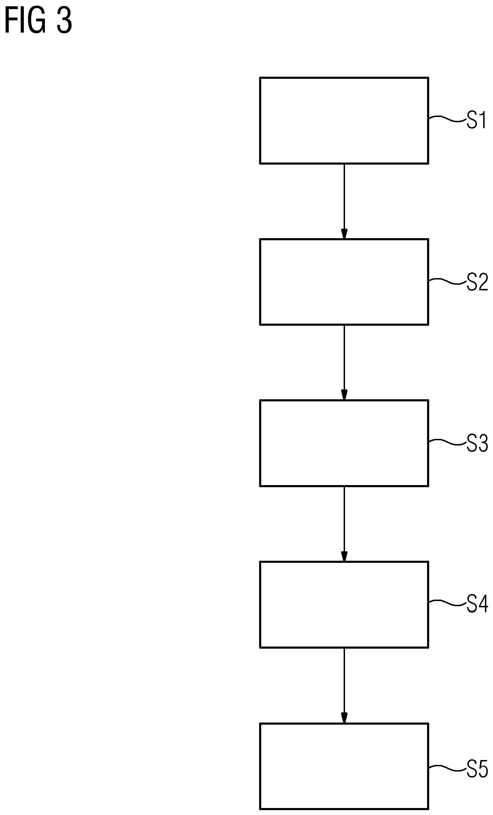

FIG 3 zeigt ein Verfahren zur additiven Fertigung mittels einer derartigen Vorrichtung.

Im Verfahrensschritt S1 erfolgt die Kraftübertragung der Kraft der Spindel auf das Beförderungselement mittels des Getriebes.

Das Filament wird im verfahrensschritt S2 durch die Werkstoffbearbeitungseinheit aufgenommen und auf die bereits oben erläuterte Weise im Verfahrensschritt S3 in Richtung des Ausgabeelements, insbesondere in Richtung einer Düse, befördert.

Im Verfahrensschritt S4 wird das Filament im Ausgabeelement erwärmt und im Verfahrensschritt S5 vom Ausgabeelement ausgegeben.

Vorzugsweise wird das erwärmte Filament tröpfchenweise oder als Strang ausgegeben.

## Patentansprüche

1. Vorrichtung (16, 161) zur Kopplung an eine Spindel (1) einer Werkzeugmaschine (15) umfassend eine Halterung (61) zur Kopplung an die Spindel (1) der Werkzeugmaschine (15), ein Beförderungselement (25, 27) und eine Werkstoffbearbeitungseinheit,
wobei die Werkstoffbearbeitungseinheit ein Getriebe aufweist, welches ein Kraftaufnahmeelement (21) und ein Kraftabgabeelement (24, 28) umfasst,
wobei das Kraftaufnahmeelement (21) zur Aufnahme einer mechanischen Kraft der Spindel (1) ausgebildet ist,
wobei das Kraftabgabeelement (24, 28) zur Abgabe einer mechanischen Kraft an das Beförderungselement (25, 27) ausgebildet ist,
wobei das Beförderungselement (25, 27) derart ausgebildet ist, ein Filament (51, 52) zu befördern,
wobei die Übertragung der vom Kraftaufnahmeelement (21) aufgenommenen Kraft auf das Kraftabgabeelement (24, 28) rein mechanisch erfolgt,
wobei das Kraftaufnahmeelement (21) separat zum Kraftabgabeelement (24, 28) ausgebildet ist und
wobei eine Drehachse des vom Kraftaufnahmeelement (21) aufgenommenen Drehmoments im Wesentlichen orthogonal zu einer Drehachse des vom Kraftabgabeelement (24, 28) gespeisten Beförderungselements (25, 27) steht,
wobei das Getriebe als kombiniertes Getriebe ausgebildet ist, welches ein Zahnradgetriebe umfassend ein erstes Zahnrad (21) und ein zweites Zahnrad (22) mit einem Schneckengetriebe umfassend eine Schneckenwelle (24) und ein Schneckenrad (25) kombiniert,
wobei das Beförderungselement (25, 27) zwei gegenüberliegende Andruckrollen aufweist,
wobei eine der zwei gegenüberliegenden Andruckrollen als Schneckenrad des Schneckengetriebes ausgeführt ist.

2. Vorrichtung (16, 161) nach Anspruch 1, wobei das Kraftaufnahmeelement (21) zur Aufnahme eines Drehmoments der Spindel (1) ausgebildet ist.

3. Vorrichtung (16, 161) nach einem der vorhergehenden Ansprüche, wobei das Kraftabgabeelement (24, 28) zur Abgabe des Drehmoments an das Beförderungselement (25, 27) ausgebildet ist.

4. Vorrichtung (16, 161) nach einem der vorhergehenden Ansprüche,
welche ein Ausgabeelement (14) umfasst,
wobei das Beförderungselement (25, 27) einer Beförderung des Filaments (51, 52) in Richtung des Ausgabeelements (14), insbesondere in Richtung einer Düse (18) des Ausgabeelements (14), dient.

5. Vorrichtung (16, 161) nach einem der vorhergehenden Ansprüche,
wobei die Vorrichtung ein Filamentaufnahmemittel zum Aufnehmen eines Filaments aufweist.

6. Vorrichtung (16, 161) nach einem der vorhergehenden Ansprüche,
wobei die Werkstoffbearbeitungseinheit wenigstens ein Heizelement (60) aufweist.

7. Vorrichtung (16, 161) nach einem der vorhergehenden Ansprüche,
wobei das Heizelement (60) im Ausgabeelement (14) angeordnet ist.

8. Vorrichtung (16, 161) nach einem der vorhergehenden Ansprüche,
wobei die Werkstoffbearbeitungseinheit dazu ausgelegt ist, für eine Bildung eines Formstückes auf Basis des Filaments (51, 52) zu dienen.

9. Vorrichtung (16, 161) nach einem der vorhergehenden Ansprüche, wobei die Vorrichtung eine Kommunikationsschnittstelle (53) zur Kommunikation mit einer Steuereinheit (57) aufweist.

10. Vorrichtung (16, 161) nach einem der Ansprüche 1 bis 9, wobei die Vorrichtung dazu ausgelegt ist, für eine additive Fertigung, insbesondere mittels Schmelzschichtung, eines Formstücks zu dienen.

11. Werkzeugmaschine mit einer Spindel und einer Vorrichtung (16, 161) nach einem der Ansprüche 1 bis 10.

12. Verfahren zur additiven Fertigung, insbesondere mittels Schmelzschichtung, zur Bildung eines Formstücks mit einer Vorrichtung (16, 161) nach einem der Ansprüche 1 bis 10 mit folgenden Schritten:
- Kraftübertragung der Kraft der Spindel auf das Beförderungselement mittels des Getriebes,
- Aufnahme eines Filaments durch die Werkstoffbearbeitungseinheit,
- Beförderung des Filaments in Richtung eines Ausgabeelements, insbesondere in Richtung einer Düse,
- Erwärmung des Filaments im Ausgabeelement mittels eines Heizelements,
- Ausgeben des erwärmten Filaments

## Claims

1. Device (16, 161) for coupling to a spindle (1) of a machine tool (15) comprising a holder (61) for coupling to the spindle (1) of the machine tool (15), a conveyor element (25, 27) and a material machining unit,
wherein the material machining unit comprises a gear, which comprises a force-receiving element (21) and a force-delivery element (24, 28),
wherein the force-receiving element (21) is embodied to receive a mechanical force from the spindle (1),
wherein the force-delivery element (24, 28) is embodied to deliver a mechanical force to a conveyor element (25, 27), wherein the conveyor element (25, 27) is embodied to convey a filament (51, 52),
wherein the transmission of the force absorbed by the force-receiving element (21) to the force-delivery element (24, 28) takes place purely mechanically,
wherein the force-receiving element (21) is embodied separately from the force-delivery element (24, 28) and wherein an axis of rotation of the torque absorbed by the force-receiving element (21) is substantially orthogonal to an axis of rotation of the conveyor element (25, 27) supplied by the force-delivery element (24, 28),
wherein the gear is embodied as a combination gear, which combines a gear train comprising a first gear wheel (21) and a second gear wheel (22) with a worm gear comprising a worm shaft (24) and a worm wheel (25),
wherein the conveyor element (25, 27) has two opposing pressure rollers,
wherein one of the two opposing pressure rollers is designed as a worm wheel of the worm gear.

2. Device (16, 161) according to claim 1, wherein the force-receiving element (21) is embodied to receive a torque from the spindle (1).

3. Device (16, 161) according to one of the preceding claims, wherein the force-delivery element (24, 28) is embodied to deliver the torque to the conveyor element (25, 27).

4. Device (16, 161) according to one of the preceding claims, which comprises a delivery element (14),
wherein the conveyor element (25, 27) is used to convey the filament (51, 52) in the direction of the delivery element (14), in particular in the direction of a nozzle (18) of the delivery element (14).

5. Device (16, 161) according to one of the preceding claims, wherein the device comprises filament-receiving means for receiving a filament.

6. Device (16, 161) according to one of the preceding claims, wherein the material machining unit comprises at least one heating element (60).

7. Device (16, 161) according to one of the preceding claims, wherein the heating element (60) is arranged in the delivery element (14).

8. Device (16, 161) according to one of the preceding claims, wherein the material machining unit is configured to be used to form a moulded part based on the filament (51, 52).

9. Device (16, 161) according to one of the preceding claims, wherein the device comprises a communication interface (53) for communicating with a control unit (57).

10. Device (16, 161) according to one of claims 1 to 9, wherein the device is configured to be used for additive manufacturing, in particular by means of fused deposition modelling, of a moulded part.

11. Machine tool with a spindle with a device (16, 161) according to one of claims 1 to 10.

12. Method for additive manufacturing, in particular by means of fused deposition modelling, for forming a moulded part using a device (16, 161) according to one of claims 1 to 10 with the following steps:
- transmission of the force from the spindle to the conveyor element by means of the gear,
- reception of a filament by the material machining unit,
- conveyance of the filament in the direction of a delivery element, in particular in the direction of a nozzle,
- heating the filament in the delivery element by means of a heating element,
- delivering the heated filament.

## Revendications

1. Montage (16, 161) d'accouplement à une broche (1) d'une machine-outil (15) comprenant une fixation (61) d'accouplement à la broche (1) de la machine-outil (15), un élément (25, 27) de transport et une unité de traitement de matériau,
dans lequel l'unité de traitement de matériau a une transmission, qui comprend un élément (21) recevant la force et un élément (24, 28) donnant la force,
dans lequel l'élément (21) recevant la force est constitué pour recevoir une force mécanique de la broche (1),
dans lequel l'élément (24, 28) donnant la force est constitué pour donner une force mécanique à l'élément (25, 27) de transport, dans lequel l'élément (25, 27) de transport est constitué pour transporter un filament (51, 52),
dans lequel la transmission de la force reçue de l'élément (21) recevant la force à l'élément (24, 28) donnant la force s'effectue d'une manière purement mécanique,
dans lequel l'élément (21) recevant la force est constitué de manière distincte de l'élément (24, 28) donnant la force, et dans lequel un axe de rotation du couple reçu par l'élément (21) recevant la force est sensiblement orthogonal à un axe de rotation de l'élément (25, 27) de transport alimenté par l'élément (24, 28) donnant la force,
dans lequel la transmission est constituée sous la forme d'une transmission combinée, qui combine une transmission par engrenage, comprenant un premier rouage (21) et un deuxième rouage (22), à une transmission par vis comprenant un arbre (24) de vis et une roue (25) de vis sans fin,
dans lequel l'élément (25, 27) de transport a deux galets de serrage opposés,
dans lequel l'un des deux galets de serrage opposés est réalisé en tant que roue de vis sans fin de la transmission à vis.

2. Montage (16, 161) suivant la revendication 1, dans lequel l'élément (21) recevant la force est constitué pour recevoir un couple de la broche (1).

3. Montage (16, 161) suivant l'une des revendications précédentes, dans lequel l'élément (24, 28) donnant la force est constitué pour donner le couple à l'élément (25, 27) de transport.

4. Montage (16, 161) suivant l'une des revendications précédentes,
qui comprend un élément (14) de sortie,
dans lequel l'élément (25, 27) de transport sert à transporter le filament (51, 52) en direction de l'élément (14) de sortie, notamment en direction d'une buse (18) de l'élément (14) de sortie.

5. Montage (16, 161) suivant l'une des revendications précédentes,
dans lequel le montage a un moyen de réception de filament pour recevoir un filament.

6. Montage (16, 161) suivant l'une des revendications précédentes,
dans lequel l'unité de traitement de matériau a au moins un élément (60) de chauffage.

7. Montage (16, 161) suivant l'une des revendications précédentes,
dans lequel l'élément (60) de chauffage est disposé dans l'élément (14) de sortie.

8. Montage (16, 161) suivant l'une des revendications précédentes,
dans lequel l'unité de traitement de matériau est conçue pour servir à la formation d'une pièce façonnée à base du filament (51, 52) .

9. Montage (16, 161) suivant l'une des revendications précédentes, dans lequel le montage a une interface (53) de communication pour la communication avec une unité (57) de commande.

10. Montage (16, 161) suivant l'une des revendications 1 à 9, dans lequel le montage est conçu pour servir à une fabrication additive, notamment au moyen d'un dépôt d'une couche par fusion, d'une pièce façonnée.

11. Machine-outil ayant une broche et un montage (16, 161) suivant l'une des revendications 1 à 10.

12. Procédé de fabrication additive, notamment au moyen d'un dépôt de couche par fusion, pour la formation d'une pièce façonnée par un montage (16, 161) suivant l'une des revendications 1 à 10, comprenant les stades suivants :
- application de la force de la broche à l'élément de transport au moyen de la transmission,
- réception d'un filament par l'unité de traitement de matériau,
- transport du filament en direction d'un élément de sortie, notamment en direction d'une buse,
- chauffage du filament dans l'élément de sortie au moyen d'un élément de chauffage,
- sortie du filament chauffé.
